# EUROPÄISCHE PATENTANMELDUNG

(11) **EP 4 365 688 A1**
(43) Veröffentlichungstag der Anmeldung: **08.05.2024**
(21) Anmeldenummer: 22205930.5
(22) Anmeldetag: 07.11.2022
(51) Int. Cl.: G05B 19/042, G05B 19/409, G05B 23/02

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(57) **Zusammenfassung**

Vorgeschlagen wird ein Leitsystem (11) für eine technische Anlage, insbesondere Fertigungs- oder Prozessanlage, das wenigstens einen Operator Station Server (13) und wenigstens einen mit dem Operator Station Server (13) verbundenen Operator Station Client (14) umfasst, wobei der Operator Station Server (13) dazu ausgebildet ist, Visualisierungsinformationen an den Operator Station Client (14) zu übertragen, und wobei der Operator Station Client (14) dazu ausgebildet ist, mittels der Visualisierungsinformationen eine grafische Darbietung für einen Operator der technischen Anlage zu erzeugen.

Das Leitsystem (11) ist dadurch gekennzeichnet, dass es einen auf dem Operator Station Server (13) implementierten Containerdienst (28) aufweist, der dazu ausgebildet ist, ein Anlagenbild eines technischen Moduls (2) zur Bedienung und Beobachtung des technischen Moduls (2) kontinuierlich zu empfangen, wobei das Leitsystem (11) dazu ausgebildet ist, das Anlagenbild zu einer Laufzeit der technischen Anlage der grafischen Darbietung (10) für den Operator der technischen Anlage kontinuierlich hinzuzufügen. Die Integrität und Authentizität der Anlagenbilder und der Containeranwendung kann durch einen entsprechenden Schutzmechanismus sichergestellt werden.

## Beschreibung

Die Erfindung betrifft ein Leitsystem für eine technische Anlage, insbesondere Fertigungs- oder Prozessanlage. Außerdem betrifft die Erfindung eine Verwendung eines Leitsystems zum Betrieb einer technischen Anlage.

Moderne Anforderungen nach mehr Flexibilität und Skalierbarkeit von verfahrenstechnischen Anlagen führen dazu, dass Anlagenteile als kleine Einheiten separat entwickelt werden - so genannte "Package Units" oder "technische Module". Ganze verfahrenstechnische Anlagen entstehen dann durch die Kombination einzelner Package Units. Um die Abläufe zwischen den einzelnen Package Units aussteuern - orchestrieren - zu können, kommen beispielsweise Batch System auf Operator Station Servern zum Einsatz.

Neben der Modularität bei der Entwicklung von Package Units bieten diese auch im Hinblick auf die Dynamik einer verfahrenstechnischen Anlage Vorteile - wenn beispielsweise nach der Produktion einer Charge die Anlage für die Produktion einer anderen Charge neu organisiert wird (Reallokation).

Eine Package Unit ist ein modularer Anlagenteil, der in einem zentralen Engineering als eine abgeschlossene Einheit integriert werden kann. Package Units sind umfangreicher als Messstellen oder technische Einrichtungen. Manchmal ist eine Package Unit gar eine ganze Teilanlage mit einer kompletten verfahrenstechnischen Struktur, die mehrere technische Einrichtungen (z.B. Tanks) umfasst, die wiederum mehrere Messstellen (z.B. Ventile, Monitore, Regler, Motoren...) beinhalten.

Bei bekannten Leitsystemen, die technische Module bzw. Package Units orchestrieren, tritt das folgende Problem auf: Die Anlagenbilder der Orchestrierung werden in der Regel beim Import einer Beschreibung der Package Unit in eine Engineering-Umgebung eines Leitsystems in der jeweiligen Technologie der Bedienung und Beobachtung des Leitsystems erzeugt. Da die Beschreibungen der Anlagenbilder, beispielsweise bei einem Einsatz des MTP-Standards VDI/VDE/NAMUR 2658 (Module Type Package), oft sehr generisch sind und gegenüber herkömmlichen Leitsystemen einen geringeren Umfang an Objekten besitzen, ist nach der Erzeugung oftmals eine aufwendige manuelle Nacharbeitung und Aufwertung notwendig. Für jede Anlage in der die Package Unit eingesetzt werden soll, ist darüber hinaus der beschriebene Vorgang zu wiederholen.

In der EP 3 712 730 A1 ist ein Verfahren zur Orchestrierung von einzelnen technischen Modulen zum Betrieb einer Prozessanlage offenbart.

Der Erfindung liegt daher die Aufgabe zugrunde, ein Leitsystem für eine technische Anlage anzugeben, welches die Effizienz und die Flexibilität einer Bedienung und Beobachtung einer mit technischen Modulen betriebenen technischen Anlage erhöht.

Diese Aufgabe wird gelöst durch ein Leitsystem für eine technische Anlage mit den Merkmalen des Anspruchs 1. Zudem wird die Aufgabe gelöst durch ein technisches System mit den Merkmalen des Anspruchs 5. Weiterhin wird die Aufgabe gelöst durch ein technisches Modul mit den Merkmalen des Anspruchs 9. Außerdem wird die Aufgabe gelöst durch eine Verwendung eines Leitsystems zum Betrieb einer technischen Anlage gemäß Anspruch 13, durch eine Verwendung eines technischen Systems zum Betrieb einer technischen Anlage gemäß Anspruch 14 und durch eine Verwendung eines technischen Moduls zum Betrieb einer technischen Anlage gemäß Anspruch 15. Vorteilhafte Weiterbildungen ergeben sich aus den abhängigen Ansprüchen.

Das erfindungsgemäße Leitsystem für eine technische Anlage, insbesondere Fertigungs- oder Prozessanlage, umfasst wenigstens einen Operator Station Server und wenigstens einen mit dem Operator Station Server verbundenen Operator Station Client, wobei der Operator Station Server dazu ausgebildet ist, Visualisierungsinformationen an den Operator Station Client zu übertragen, und wobei der Operator Station Client dazu ausgebildet ist, mittels der Visualisierungsinformationen eine grafische Darbietung für einen Operator der technischen Anlage zu erzeugen.

Das Leitsystem ist dadurch gekennzeichnet, dass es einen auf dem Operator Station Server implementierte Containerdienst aufweist, der dazu ausgebildet ist, ein technisches Modul mit einem Anlagenbild zur Bedienung und Beobachtung des technischen Moduls zu referenzieren und das Anlagenbild von dem technischen Modul kontinuierlich zu empfangen, wobei das Leitsystem dazu ausgebildet ist, das Anlagenbild zu einer Laufzeit der technischen Anlage der grafischen Darbietung für den Operator der technischen Anlage kontinuierlich hinzuzufügen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktions-elemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Das Leitsystem ist dazu ausgebildet, das von dem technischen Modul bereitgestellte Anlagenbild visuell darzustellen, wobei das Anlagenbild das technische Modul für ein Bedienen und Beobachten der technischen Anlage repräsentiert. Im Falle eines technischen Moduls für eine Prozessanlage kann solch ein Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Das erfindungsgemäße Leitsystem stellt einen Containerdienst zur Verfügung, der dem Operator eines Leitsystems in einer geeigneten Darstellungsform die Möglichkeit bereitstellt, auf die Bedienung und Beobachtung des technischen Moduls zuzugreifen.

Im Gegensatz zu bekannten Leitsystemen wird dabei das Anlagenbild zur Bedienung und Beobachtung des technischen Moduls nicht im Rahmen einer Projektierung der technischen Anlage in eine Projektierungssoftware (fest) integriert. Vielmehr wird das Anlagenbild (oder die Anlagenbilder) als zentrale Schnittstelle für den Operator zur Bedienung und Beobachtung des technischen Moduls auf dem technischen Modul selbst bereitgestellt. Dies bedeutet, dass die dazugehörige Applikation von dem technischen Modul - und nicht von dem Leitsystem bzw. dessen Operator Station Server - ausgeführt wird.

Das erfindungsgemäße Leitsystem stellt hierfür einen entsprechenden Container(dienst) zur Verfügung, der das Anlagenbild des technischen Moduls referenziert und dieses kontinuierlich empfängt. Kontinuierlich bedeutet dabei, dass das Anlagenbild von dem technischen Modul fortdauernd aktualisiert und, insbesondere in bestimmten Zeitschritten, an den Containerdienst auf dem Operator Station Server übermittelt wird. Für den Datenaustausch zwischen dem technischen Modul und dem Leitsystem bzw. dessen Operator Station Server kann beispielsweise eine auf dem OPC UA Standard basierende Verbindung genutzt werden.

Mit der Erfindung geht der Vorteil einher, dass auf in das Leitsystem importierte, modifizierte, und möglichweise mit Fehlern behaftete Anlagenbilder für die Orchestrierung des technischen Moduls (bzw. der technischen Module) verzichtet werden kann. Insbesondere technische Module, die aufgrund ihres Aufbaus umfangreiche Automatisierungshardware beinhalten, wie beispielsweise Operator Station Server, können durch das erfindungsgemäße Leitsystem einfacher und mit fehlerminimiertem Integrationsaufwand in eine gemeinsame Orchestrierung eingebunden werden. Darüber hinaus kann das erfindungsgemäße Leitsystem ein wichtiger Baustein bei der Realisierung von sogenannten Plug&Produce-Lösungen sein, bei denen ein Orchestrierungsaufwand im Rahmen einer Integration von technischen Modulen in ein Leitsystem minimiert werden soll.

Bevorzugt ist das Leitsystem dazu ausgebildet, zu einer Laufzeit der technischen Anlage eine das Anlagenbild betreffende Eingabe des Operators über der Operator Station Client zu empfangen und an den Containerdienst auf dem Operator Station Server zu übermitteln, wobei der Containerdienst dazu ausgebildet ist, die Eingabe des Operators an das technische Modul zu übermitteln, wobei die Eingabe insbesondere für eine Steuerung einer technischen Funktionalität des technischen Moduls ausgebildet ist.

Der Containerdienst ermöglicht es dem Operator, in der ihm von dem Operator Station Client bereitgestellten grafischen Darbietung (also der grafischen Oberfläche zur Bedienung und Beobachtung der technischen Anlage) eine Eingabe zu tätigen, die das Anlagenbild des technischen Moduls betrifft. Hierzu kann der Containerdienst beispielsweise ein Fenster in der grafischen Darbietung erzeugen, in welchem das Anlagenbild in einer gewohnten Art und Weise dargestellt wird. Der Operator kann hierbei alle gängigen Operationen zum Bedienen und Beobachten von Anlagenbildern vornehmen - als ob das Anlagenbild direkt von dem Leitsystem berechnet und zur Verfügung gestellt werden würde. Der Unterschied zu den bislang bekannten Leitsystemen liegt jedoch darin, dass die Eingabe des Operators, beispielsweise das Verstellen eines Reglers oder die Änderung eines Parameters, nicht ein von dem eigenen Leitsystem, sondern ein von dem technischen Modul erzeugtes Anlagenbild betrifft.

Im Rahmen einer bevorzugten Weiterbildung der Erfindung ist der Containerdienst dazu ausgebildet, neben dem Anlagenbild weitere, zu dem Anlagenbild gehörige Informationen von dem technischen Modul zu empfangen und, insbesondere auf eine Anforderung des Operators hin, in einem computerimplementierten Speicher des Leitsystems zu hinterlegen. Über eine entsprechende Schnittstelle kann der Containerdienst dabei die zusätzlichen Informationen empfangen und sowohl dem Speicher als auch möglichen weiteren Komponenten oder Diensten des Leitsystems für eine Verarbeitung zur Verfügung stellen.

Bevorzugt handelt es sich bei den Informationen um Alarmmeldungen, wobei das Leitsystem dazu ausgebildet ist, die Alarmmeldungen in eine Alarmverwaltung des Leitsystems zu integrieren. Der Operator kann dadurch auf einfache Art und Weise einen direkten Überblick über mögliche, innerhalb des technischen Moduls auftretende Alarme erhalten. Eine Alarmmeldung ist dabei eine Meldung, die eine in der Regel unverzügliche Reaktion eines Operators erfordert. Unter einer Meldung wird dabei ein Bericht vom Eintreten eines Ereignisses verstanden, das einen Übergang aus einem diskreten Zustand innerhalb des technischen Moduls in einen anderen diskreten Zustand darstellt.

Die zuvor formulierte Aufgabe wird zudem gelöst durch ein technisches System, umfassend ein Leitsystem wie zuvor erläutert und ein damit verbundenes technisches Modul, wobei in einer Rechenumgebung des technischen Moduls eine Containeranwendung ablaufbar implementiert ist, bei deren Ablauf das zu dem technischen Modul gehörige Anlagenbild zur Bedienung und Beobachtung des technischen Moduls kontinuierlich an den Containerdienst des Leitsystems übermittelt wird. Auf dem technischen Modul selbst wird das (oder die) für die Bedienung und Beobachtung notwendige Anlagenbild erzeugt und kontinuierlich aktualisiert. Eine Containeranwendung des technischen Moduls stellt das Anlagenbild, beispielsweise über eine OPC UA Verbindung, dem Containerdienst des Leitsystems zur Verfügung.

Bevorzugt weisen der Operator Station Server des Leitsystems ein digitales Abbild der technischen Anlage und das technische Modul ein digitales Abbild des technischen Moduls auf, wobei das Leitsystem und das technische Modul jeweils dazu ausgebildet sind, die jeweiligen digitalen Abbilder kontinuierlich, insbesondere in festgelegten Zeitschritten, miteinander abzugleichen. Im Falle einer Prozessanlage bzw. einem technischen Modul für eine Prozessanlage werden in solchen digitalen Abbildern die aktuellen Prozessmesswerte, Status und sonstige Informationen der einzelnen Prozessgeräte abgebildet. Durch den Abgleich ist unter anderem eine gemeinsame Archivierung oder eine automatisch koordinierte Orchestrierung über Ablaufdiagramme oder Skripte durch den orchestrierenden Operator Station Server des Leitsystems möglich.

Im Rahmen einer bevorzugten Weiterbildung der Erfindung weisen das von dem technischen Modul an den Containerdienst des Leitsystems übermittelte Anlagenbild und die in der Rechenumgebung des technischen Moduls ablaufbar implementierte Containeranwendung einen Schutzmechanismus zum Nachweis ihrer Identität und Integrität sowie Authentizität auf. Bevorzugt erfolgen die Identitäts- und Integritätsprüfung des Anlagenbildes und der in der Rechenumgebung des technischen Moduls implementierten Containeranwendung bei jeder erneuten Übermittlung des Anlagenbildes an den Containerdienst des Leitsystems.

Der Schutzmechanismus kann dabei einen sicher in dem technischen Modul hinterlegten privaten Schlüssel (Geheimschlüssel bzw. private key), ein von einem Hersteller oder einem Anwender des technischen Moduls ausgestelltes, und ein, dem Containerdienst des Leitsystems zur Verfügung gestellt, Identifikationszertifikat, und eine Zertifikatskette umfassen, wobei die Zertifikatskette umfasst:
- ein Zertifikat einer Zertifizierungsinstanz, die das Identifikationszertifikat ausgestellt hat,
- ein Zertifikat einer der Zertifizierungsinstanz übergeordneten Wurzelzertifizierungsstelle, und, falls zutreffend,
- Zertifikate von Zwischenzertifizierungsstellen, die in der Zertifikatskette zwischen der Zertifizierungsinstanz und der Wurzelzertifizierungsstelle liegen.

Eine mögliche Funktionsweise des Schutzmechanismus ist die folgende: Nach jeder Aktualisierung des Anlagenbildes wird das Anlagenbild unter Verwendung des o.g. Zertifikats signiert. Hierbei ist zu beachten, dass im o.g. Zertifikat insbesondere der öffentliche Schlüssel zum o.g. Privaten Schlüssel enthalten ist. Somit kann die oben genannte Signatur unter Verwendung des oben genannten Zertifikats und insbesondere des im Zertifikat enthaltenen öffentlichen Schlüssels sowie der zugehörigen Zertifikatskette standardmäßig (nach RFC 5280) validiert werden. Mittels der Signaturvalidierung werden die Integrität und die Authentizität des Anlagenbildes geprüft. Falls dabei festgestellt wird, dass die Signatur ungültig ist bzw. nicht zum Anlagenbild passt, deutet dies auf eine unberechtigte Manipulation hin. In diesem Fall wird das Anlagenbild als unberechtigt manipuliert abgelehnt.

Bei jeder Zurverfügungstellung des Anlagenbildes, das (wie oben erläutert) unter Verwendung des im technischen Modul hinterlegten privaten Schlüssels signiert wurde, validiert der Containerdienst die Integrität und die Authentizität des Anlagenbildes, indem er die Signatur unter Verwendung des zugehörigen öffentlichen Schlüssels und der zugehörigen Zertifikatskette validiert.

Zusätzlich kann auf eine identische Art und Weise die Identität, Integrität und Authentizität der oben genannten Containeranwendung, die das Anlagenbild dem Containerdienst zur Verfügung stellt, bei jeder Zurverfügungstellung des Anlagenbildes vom Containerdienst geprüft werden. Analog zum privaten Schlüssel, der zum Signieren des Anlagenbildes verwendet wird, wird dazu ein im technischen Modul sicher hinterlegter privater Schlüssel benötigt, wobei der für die Signaturvalidierung erforderliche öffentliche Schlüssel in einem zugehörigen Zertifikat enthalten ist, der von einer vertrauenswürdigen Instanz (wie z.B. dem Hersteller oder dem Anwender des Moduls) ausgestellt wurde. Überdies soll jeder Instanz, die die Signatur validieren soll, die zugehörige Zertifikatskette vorliegen.

In einem möglichen Ausführungsszenario kann der gleiche private Schlüssel zum Signieren von Anlagenbildern und zum Signieren der Containeranwendung verwendet werden. Es sind jedoch auch andere Szenarien, beispielsweise unter Verwendung unterschiedlicher privater Schlüssel denkbar.

In einem weiteren möglichen Ausführungsszenario kann zum Signieren der Anlagenbilder und/oder der Containeranwendung das sog. IDevID-Zertifikat (nach IEEE 802.1AR) als das sog. vom Hersteller ausgestellte Identifikationszertifikat des Moduls zum Einsatz kommen. Alternativ kann in einem weiteren Ausführungsszenario das sog. vom Anwender/Betreiber des Moduls ausgestellte LDevID-Zertifikat (nach IEEE 802.1AR) dazu verwendet werden.

Die zuvor formulierte Aufgabe wird zudem gelöst durch ein technisches Modul, welches eine Rechenumgebung aufweist, in welcher eine Containeranwendung ablaufbar implementiert ist, bei deren Ablauf ein zu dem technischen Modul gehöriges Anlagenbild zur Bedienung und Beobachtung des technischen Moduls kontinuierlich an einen Containerdienst eines mit dem technischen Modul verbindbaren Leitsystems übermittelbar ist.

Bevorzugt ist das technische Modul dazu ausgebildet, neben dem Anlagenbild weitere, zu dem Anlagenbild gehörige Informationen von dem technischen Modul an das Leitsystem zu übermitteln. Bei den Informationen kann es sich um Alarmmeldungen handeln.

Ganz besonders bevorzugt ist das technische Modul dazu ausgebildet, von dem Leitsystem eine das Anlagenbild betreffende Eingabe eines Operators zu empfangen, wobei die Eingabe insbesondere zur Steuerung eines Betriebs einer technischen Funktionalität des technischen Moduls ausgebildet ist.

Die zuvor formulierte Aufgabe wird zudem gelöst durch die Verwendung eines Leitsystems wie zuvor erläutert zum Betrieb einer technischen Anlage, insbesondere Fertigungs- oder Prozessanlage.

Die zuvor formulierte Aufgabe wird zudem gelöst durch die Verwendung eines technischen Systems wie zuvor erläutert zum Betrieb einer technischen Anlage, insbesondere Fertigungs- oder Prozessanlage.

Die zuvor formulierte Aufgabe wird zudem gelöst durch die Verwendung eines technischen Moduls wie zuvor erläutert zum Betrieb einer technischen Anlage, insbesondere Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein Objektmodell eines erfindungsgemäßen technischen Moduls;
- FIG 2: einen Aspekt eines erfindungsgemäßen technischen Systems; und
- FIG 3: ein erfindungsgemäßes Leitsystem in einer schematischen Darstellung.

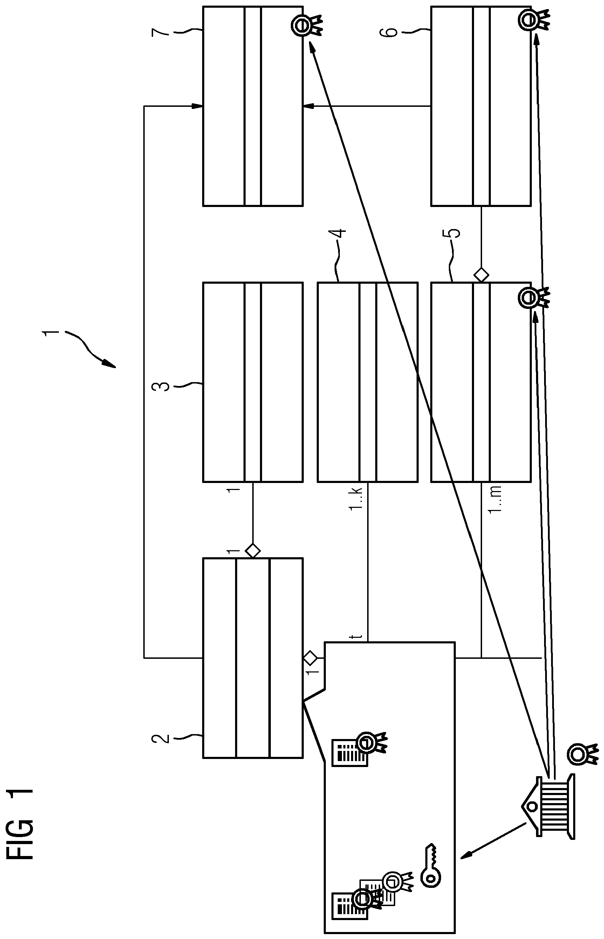

In FIG 1 ist ein Objektmodell 1 eines technischen Moduls 2 dargestellt. Das technische Modul 2 weist eine Schnittstellendefinition 3 und 1..k Komponenten 4 auf, die jeweils eine technische Funktionalität aufweisen. Beispielsweise kann eine Komponente 4 ein Rührer mit einer Rührfunktionalität, ein Heizer mit einer Heizfunktionalität oder ein Mischer mit einer Mischfunktionalität sein. In der Schnittstellendefinition 3 sind unter anderem Informationen darüber hinterlegt, wie Daten mit dem technischen Modul 2 ausgetauscht werden können.

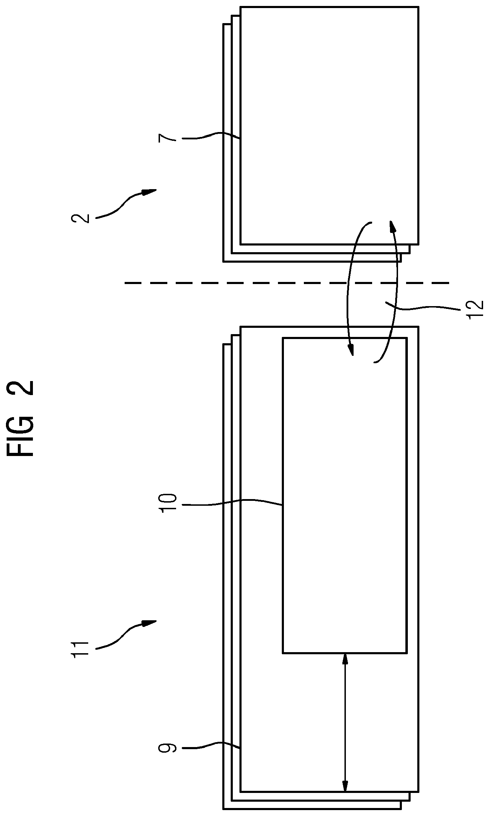

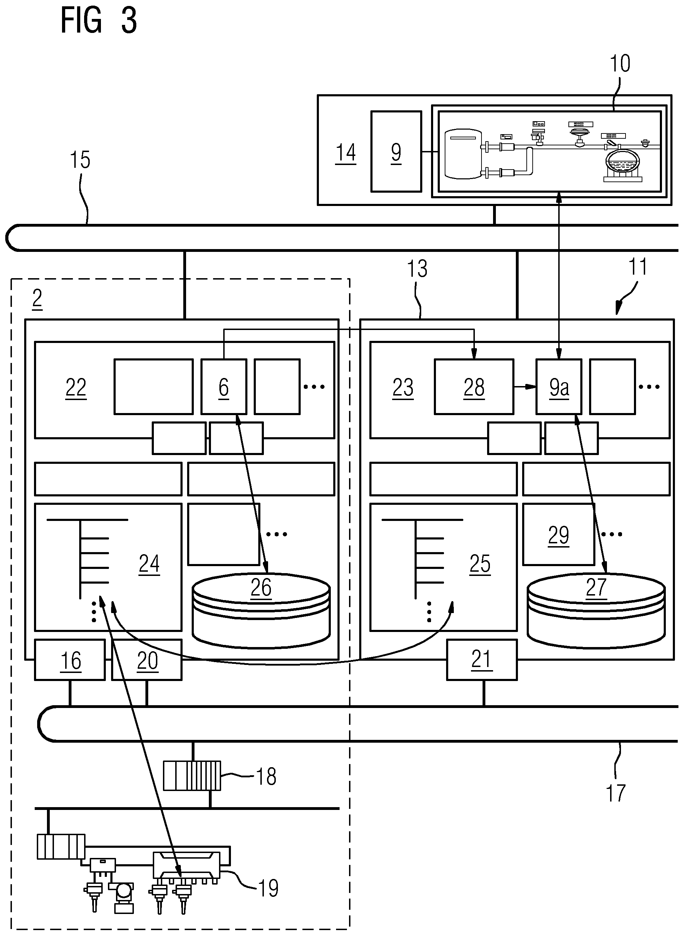

In dem technischen Modul 2 sind 1..m Anlagenbilder 5 projektiert, die jeweils einen Teilaspekt der technischen Funktionalität des technischen Moduls 2 bedienbar und beobachtbar machen. Das technische Modul weist eine Containeranwendung 6 auf, die einen Anlagenbilddienst 7 des technischen Moduls 2 referenziert. Bei bislang bekannten technischen Modulen werden die Anlagenbilder 5 zusammen mit weiteren Beschreibungen des technischen Moduls 2 an eine übergeordnete Orchestrierungsinstanz (wie ein Leitsystem) übermittelt. Im vorliegenden Fall erzeugt die Containeranwendung 6 jedoch lediglich einen Container, d.h. eine Art leeres Anlagenbild, welches mit einer Referenz auf den Anlagenbilddienst 7 versehen wird. Wenn der Container von einem Leitsystem in dessen Bedienung und Beobachtung integriert wird, kann das Leitsystem dadurch auf das von dem Anlagenbilddienst 7 des technischen Moduls 2 erzeugte und kontinuierlich aktualisierte Anlagenbild zur Bedienung und Beobachtung des technischen Moduls 2 zugreifen (vgl. hierzu die FIG 2 und FIG 3).

Eine Zertifizierungsinstanz 8 des Herstellers /des Anwenders/ des Betreibers des technischen Moduls 2 hat das technische Modul 2 mit einem Zertifikat, das zum im technischen Modul sicher hinterlegten Privaten Schlüssel ausgestellt wurde, und der zugehörigen Zertifikatskette versehen. Dabei können in Bezug auf den o.g. privaten Schlüssel die Vorgaben gemäß IEEE 802.1AR angewandt worden sein.

Dieser private Schlüssel kann in Kombination mit dem im zugehörigen Zertifikat enthaltenen öffentlichen Schlüssel zum Schutz der Integrität/Authentizität der Anlagenbilder und /oder der Containeranwendung verwendet werden. Wie oben erläutert, können mehrere private Schlüssel zu verschiedenen Zwecken zum Einsatz kommen.

In FIG 2 ist das Zusammenspiel zwischen dem technischen Modul 2 und einem Leitsystem 11 dargestellt. Das Leitsystem 11 weist einen Anlagenbildanzeigedienst 9 auf, welcher (unter anderem) ein variables Anzeigeelement 10 bereitstellt. In diesem Anzeigeelement 10 werden die von der Containeranwendung 6 des technischen Moduls 6 empfangenen Informationen umgesetzt. Konkret bedeutet dies, dass das vom dem Anlagenbilddienst 7 des technischen Moduls 2 bereitgestellte ("gehostete") Anlagenbild grafisch wiedergegeben wird, so dass ein Operator des Leitsystems 11 das technische Modul 2 hierüber bedienen und beobachten kann. Die bidirektional ausgebildete Verbindung 12 zwischen dem technischen Modul 2 und dem Leitsystem 11 kann gemäß dem OPC UA Standard ausgebildet sein, wobei eine beidseitige Authentifizierung, d.h. eine Prüfung der Integrität und der Authentizität beinhalten.

In FIG 3 ist auf der rechten Seite des Bildes das Leitsystem 11 für die Bedienung und Beobachtung einer als Prozessanlage ausgebildeten technischen Anlage schematisch dargestellt. Das Leitsystem 11 umfasst einen Operator Station Server 13 und einen Operator Station Client 14. Die Operator Station Server 13 und der Operator Station Client 14 sind über einen Terminalbus 15 miteinander und optional mit nicht dargestellten weiteren Komponenten des Leitsystems 11 wie einem Archivserver oder einem Engineering Station Server verbunden.

Ein Benutzer bzw. Operator kann zum Zwecke des Bedienens und Beobachtens über den Operator Station Client 14 mittels des Terminalbus 15 auf den Operator Station Server 13 zugreifen. Der Terminalbus 15 kann, ohne sich darauf zu beschränken, beispielsweise als Industrial Ethernet ausgebildet sein.

Auf der linken Seite des Bildes in FIG 3 ist das technische Modul 2 dargestellt. Es verfügt ebenfalls über eine Verbindung zu dem Terminalbus 15. Das technische Modul 2 weist eine Geräteschnittstelle 16 auf, die mit einem Anlagenbus 17 verbunden ist. Über diese Geräteschnittstelle 16 ist das technische Modul 2 mit einem Automatisierungsgerät 18 sowie mit weiteren Komponenten der verfahrenstechnischen Anlage wie Peripheriegeräten 19 verbunden und kann mit diesen kommunizieren. Der Anlagenbus 17 kann, ohne sich darauf zu beschränken, beispielsweise als Industrial Ethernet ausgebildet sein.

Das technische Modul 2 und der Operator Station Server 13 des Leitsystems 11 weisen eine OPC UA Schnittstelle 20, 21 auf, die jeweils mit dem Anlagenbus 17 verbunden ist. Auf dem Operator Station Server 13 und dem technischen Modul 2 sind (unter anderem) ein Visualisierungsdienst 22, 23, ein Prozessabbild 24, 25 und ein Speicher 26, 27 implementiert.

Der in dem Operator Station Server 13 integrierte Visualisierungsdienst 23 initiiert eine Übertragung von Visualisierungsinformationen an den Operator Station Client 14. Der Operator Station Client 14 ist dazu ausgebildet, eine Visualisierung, d.h. eine grafische Darbietung, insbesondere von Anlagenbildern, zum Bedienen und Beobachten der Prozessanlage darzustellen.

In dem Prozessabbild 24, 25 ist jeweils eine Momentaufnahme der (Signal-)Zustände der verbundenen Geräten und/oder Applikationen hinterlegt. Über die OPC UA Schnittstellen 20, 21 werden die Prozessabbilder 24, 25 des technischen Moduls 2 und des Leitsystems 11 kontinuierlich miteinander abgeglichen.

Die Containeranwendung 6 stellt einem Containerdienst 28 des Leitsystems 11 den leeren Container mit der darin enthaltenen Referenz auf das Anlagenbild, das vom Anlagenbilddienst 7 des technischen Moduls 2 bereitgestellt wird, zur Verfügung. Der Containerdienst 28 übermittelt diese Information sowohl an den Speicher 27 als auch an den Anlagenbildanzeigedienst 9a, 9, der aus einem Serverteil 9a und einem Clientteil 9 besteht. Der Anlagenbildanzeigedienst 9a, 9 stellt darauf die Fensteranwendung 10 mit dem darin referenzierten Anlagenbild des technischen Moduls 2 für einen Operator des Leitsystems 11 grafisch dar.

Ein Alarmdienst 29 des Leitsystems 11 greift auf die in dem Speicher 27 hinterlegten Informationen bezüglich des Anlagenbildes des technischen Moduls 2 zu und entnimmt diesen etwaige Alarmmeldungen. Diese werden wieder an den Operator Station Client 14 übertragen, um dem Operator die zu dem technischen Modul 2 gehörigen Alarmmeldungen visuell und ggf. akustisch darzubieten.

Eingaben des Operators, die das Anlagenbild betreffen, und die der Operator direkt in der Fensteranwendung 10 tätigen kann, werden über den Containerdienst 28 des Leitsystems 1 an die Containeranwendung 6 des technischen Moduls 2 übermittelt. Daraufhin werden in dem technischen Modul 2 die von dem Operator angeforderten Handlungen vorgenommen. Insbesondere kann der Operator dabei die technische Funktionalität einer der Komponenten 4 des technischen Moduls 2 anfordern.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (11) für eine technische Anlage, insbesondere Fertigungs- oder Prozessanlage, das wenigstens einen Operator Station Server (13) und wenigstens einen mit dem Operator Station Server (13) verbundenen Operator Station Client (14) umfasst, wobei der Operator Station Server (13) dazu ausgebildet ist, Visualisierungsinformationen an den Operator Station Client (14) zu übertragen, und wobei der Operator Station Client (14) dazu ausgebildet ist, mittels der Visualisierungsinformationen eine grafische Darbietung für einen Operator der technischen Anlage zu erzeugen,
**dadurch gekennzeichnet, dass**
das Leitsystem (11) einen auf dem Operator Station Server (13) implementierten Containerdienst (28) aufweist, der dazu ausgebildet ist, ein Anlagenbild eines technischen Moduls (2) zur Bedienung und Beobachtung des technischen Moduls (2) kontinuierlich zu empfangen, wobei das Leitsystem (11) dazu ausgebildet ist, das Anlagenbild zu einer Laufzeit der technischen Anlage der grafischen Darbietung (10) für den Operator der technischen Anlage kontinuierlich hinzufügen.

2. Leitsystem (11) nach Anspruch 1, das dazu ausgebildet ist, zu einer Laufzeit der technischen Anlage eine das Anlagenbild betreffende Eingabe des Operators über der Operator Station Client (14) zu empfangen und an den Containerdienst (28) auf dem Operator Station Server (13) zu übermitteln, wobei der Containerdienst (28) dazu ausgebildet ist, die Eingabe des Operators an das technische Modul (2) zu übermitteln, wobei die Eingabe insbesondere für eine Steuerung einer technischen Funktionalität des technischen Moduls (2) ausgebildet ist.

3. Leitsystem (11) nach einem der vorangegangenen Ansprüche, bei dem der Containerdienst (28) dazu ausgebildet ist, neben dem Anlagenbild weitere, zu dem Anlagenbild gehörige Informationen von dem technischen Modul (2) zu empfangen und, insbesondere auf eine Anforderung des Operators hin, in einem computerimplementierten Speicher (27) des Leitsystems (11) zu hinterlegen.

4. Leitsystem (11) nach Anspruch 3, bei dem es sich bei den Informationen um Alarmmeldungen handelt, wobei das Leitsystem (11) dazu ausgebildet ist, die Alarmmeldungen in eine Alarmverwaltung (29) des Leitsystems (11) zu integrieren.

5. Technisches System, umfassend ein Leitsystem (11) nach einem der vorangegangenen Ansprüche und ein damit verbundenes technisches Modul (2), wobei in einer Rechenumgebung des technischen Moduls (2) eine Containeranwendung (6) ablaufbar implementiert ist, bei deren Ablauf das zu dem technischen Modul (2) gehörige Anlagenbild zur Bedienung und Beobachtung des technischen Moduls (2) kontinuierlich an den Containerdienst des Leitsystems (11) übermittelt wird.

6. Technisches System nach Anspruch 5, bei dem der Operator Station Server (13) des Leitsystems (11) ein digitales Abbild (25) der technischen Anlage und das technische Modul (2) ein digitales Abbild (24) des technischen Moduls (2) aufweisen, wobei das Leitsystem (11) und das technische Modul (2) jeweils dazu ausgebildet sind, die jeweiligen digitalen Abbilder (24, 25) kontinuierlich, insbesondere in festgelegten Zeitschritten, miteinander abzugleichen.

7. Technisches System nach Anspruch 5 oder 6, bei dem das von dem technischen Modul (2) an den Containerdienst (28) des Leitsystems (11) übermittelte Anlagenbild und die in der Rechenumgebung des technischen Moduls (2) ablaufbar implementierte Containeranwendung (6) einen Schutzmechanismus zum Nachweis ihrer Identität und Integrität aufweisen.

8. Technisches System nach Anspruch 7, bei dem der Schutzmechanismus einen sicher in dem technischen Modul hinterlegten privaten Schlüssel, ein von einem Hersteller oder einem Anwender des technischen Moduls (2) ausgestelltes, und ein dem Containerdienst des Leitsystems (11) zur Verfügung gestelltes Identifikationszertifikat und eine dazugehörige Zertifikatskette umfasst, wobei die Zertifikatskette umfasst:
- ein Zertifikat einer Zertifizierungsinstanz, die das Zertifikat ausgestellt hat,
- ein Zertifikat einer der Zertifizierungsinstanz übergeordneten Wurzelzertifizierungsstelle, und, falls zutreffend,
- Zertifikate von Zwischenzertifizierungsstellen, die in der Zertifikatskette zwischen der Zertifizierungsinstanz und der Wurzelzertifizierungsstelle liegen.

9. Technisches Modul (2), welches eine Rechenumgebung aufweist, in welcher eine Containeranwendung (6) ablaufbar implementiert ist, bei deren Ablauf ein zu dem technischen Modul (2) gehöriges Anlagenbild zur Bedienung und Beobachtung des technischen Moduls (2) kontinuierlich an einen Containerdienst (28) eines mit dem technischen Modul (2) verbindbaren Leitsystems (11) übermittelbar ist.

10. Technisches Modul (2) gemäß Anspruch 9, das dazu ausgebildet ist, neben dem Anlagenbild weitere, zu dem Anlagenbild gehörige Informationen von dem technischen Modul (2) an das Leitsystem (11) zu übermitteln.

11. Technisches Modul (2) gemäß Anspruch 10, bei dem es sich bei den Informationen um Alarmmeldungen handelt.

12. Technisches Modul (2) gemäß einem der Ansprüche 9 bis 11, welches dazu ausgebildet ist, von dem Leitsystem (11) eine das Anlagenbild betreffende Eingabe eines Operators zu empfangen, wobei die Eingabe insbesondere zur Steuerung eines Betriebs einer technischen Funktionalität des technischen Moduls (2) ausgebildet ist.

13. Verwendung eines Leitsystems (11) gemäß einem der Ansprüche 1 bis 4 zum Betrieb einer technischen Anlage, insbesondere Fertigungs- oder Prozessanlage.

14. Verwendung eines technischen Systems gemäß einem der Ansprüche 5 bis 8 zum Betrieb einer technischen Anlage, insbesondere Fertigungs- oder Prozessanlage.

15. Verwendung eines technischen Moduls (2) gemäß einem der Ansprüche 9 bis 12 zum Betrieb einer technischen Anlage, insbesondere Fertigung- oder Prozessanlage.
